Europäisches Patentamt

European Patent Office

Office européen des brevets

(11) Publication number: **0 481 455 A2**

# EUROPEAN PATENT APPLICATION

(21) Application number: **91117654.3**

(22) Date of filing: **16.10.91**

(51) Int. Cl.5: **H04L 12/24**

(30) Priority: **17.10.90 JP 277990/90**

(43) Date of publication of application:
**22.04.92 Bulletin 92/17**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Ryu, Tadamitsu, c/o Fujitsu Network**
**Eng. Ltd.**
**100-1, Sakato, Takatsu-ku**
**Kawasaki-shi, Kanagawa, 213(JP)**
Inventor: **Kakehi, Gen, c/o Fujitsu Network**
**Eng. Ltd.**
**100-1, Sakato, Takatsu-ku**
**Kawasaki-shi, Kanagawa, 213(JP)**
Inventor: **Aoe, Shigeru, c/o Fujitsu Network**
**Eng. Ltd.**
**100-1, Sakato, Takatsu-ku**
**Kawasaki-shi, Kanagawa, 213(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Data gathering system and method for communication system.**

(57) A data gathering system includes a data file for storing initial data received from a communication network (1) in accordance with a predetermined management format, and a parts file (7) for storing parts data about the initial data. The parts data has information which categorizes the initial data. A data input position management part (8) generates management information which defines the predetermined management format from the parts data stored in the parts file. The management information includes identification data identifying real data received from the network and position data indicative of a storage area formed in the data file in which the real data should be stored. A data input position table (10) receives the real data from the communication network and instructs the data file to store the real data in accordance with the management information.

*FIG.1*

EP 0 481 455 A2

## BACKGROUND OF THE INVENTION

### (1) Field of the Invention

The present invention generally relates to data gathering systems, and more particularly to a data gathering system which receives information transferred from network devices via a communication network and stores the information in a storage device in a predetermined management format.

### (2) Description of the Prior Art

Conventionally, a system has been known which gathers information transferred from network devices, such as telephone sets, via a public telephone network. Such information has a predetermined number of data pieces, a predetermined order of the data pieces and the size of each data piece. These parameters of the information are defined during, for example, the system design procedure.

Recently, there has been considerable activity in the development of an advanced network system capable of transferring data between various different types of network devices. In general, the network devices of different types generate supervisory data having different formats. Since an advanced network system is computerized, it is necessary to design software (program) taking into account the format differences of the supervisory data. For example, during the design procedure, it is necessary for a system designer to manually determine, for each format of supervisory data, how much a storage capacity should be allocated in an available storage area of the storage device and where the allocated storage capacity should be placed in the available storage area. Thus, it takes a long time to design the system. Further, the program must be modified or redesigned each time the system is modified by, for example, adding to the system network devices of a type different from the types of network devices which have been connected to the network.

### SUMMARY OF THE INVENTION

It is a general object of the present invention is to provide an improved data gathering system in which the above disadvantages are eliminated.

A more specific object of the present invention is to provide a data gathering system and method in which supervisory data of various types transferred from network terminals are stored in accordance with predetermined management information.

The above objects of the present invention are achieved by a data gathering system for a communication network which mutually couples a plurality of network devices, the data gathering system comprising:

data file means, coupled to the communication network, for storing initial data received from the communication network in accordance with a predetermined management format;

parts file means, coupled to the communication network, for storing parts data about the initial data, the parts data having information which categorizes the initial data;

data input position management means, coupled to the parts file means, for generating management information which defines the predetermined management format from the parts data stored in the parts file means, the management information including identification data identifying real data received from the network and position data indicative of a storage area formed in the data file means in which the real data should be stored; and

data input position table means, coupled to the data file means and the data input position management means, for receiving the real data from the communication network and for instructing the data file means to store the real data in accordance with the management information.

The above-mentioned objects of the present invention are also achieved by a data gathering method for a communication network which mutually couples a plurality of network devices, the data gathering method comprising the steps of:

storing initial data received from the communication network in a data file in accordance with a predetermined management format;

storing parts data about the initial data in a parts file, the parts data having information which categorizes the initial data;

generating management information which defines the predetermined management format from the parts data stored in the parts file, the management information including identification data identifying real data received from the network and position data indicative of a storage area formed in the data file in which the real data should be stored; and

receiving the real data from the communication network and instructing the data file to store the real data in accordance with the management information.

### BRIEF DESCRIPTION OF THE DRAWINGS

Other objects, features and advantages of the present invention will become apparent from the following detailed description when read in conjunction with the accompanying drawings, in which:

FIG.1 is a block diagram of a data gathering system according to a first preferred embodiment of the present invention;

FIG.2 is a diagram of a format used when data is sent by a network device;

FIG.3 is a diagram for explaining a link condition included in the format shown in FIG.2;

FIG.4 is a diagram of a format of supervisory data included in the format shown in FIG.2;

FIG.5 is a diagram of a structure of a parts file shown in FIG.1;

FIGS.6 and 7 are respectively flowcharts showing the operation of the first preferred embodiment of the present invention;

FIG.8 is a block diagram of a data gathering system according to a second preferred embodiment of the present invention;

FIGS.9A, 9B and 9C are diagrams showing formats displayed on a display device;

FIG.10 is a diagram of a format including a parts type and parts type data;

FIGS.11, 12 and 13 are flowcharts showing the operation of the second preferred embodiment of the present invention; and

FIG.14 is a block diagram of a hardware structure of the data gathering system of the present invention.

DESCRIPTION OF THE PREFERRED EMBODIMENTS

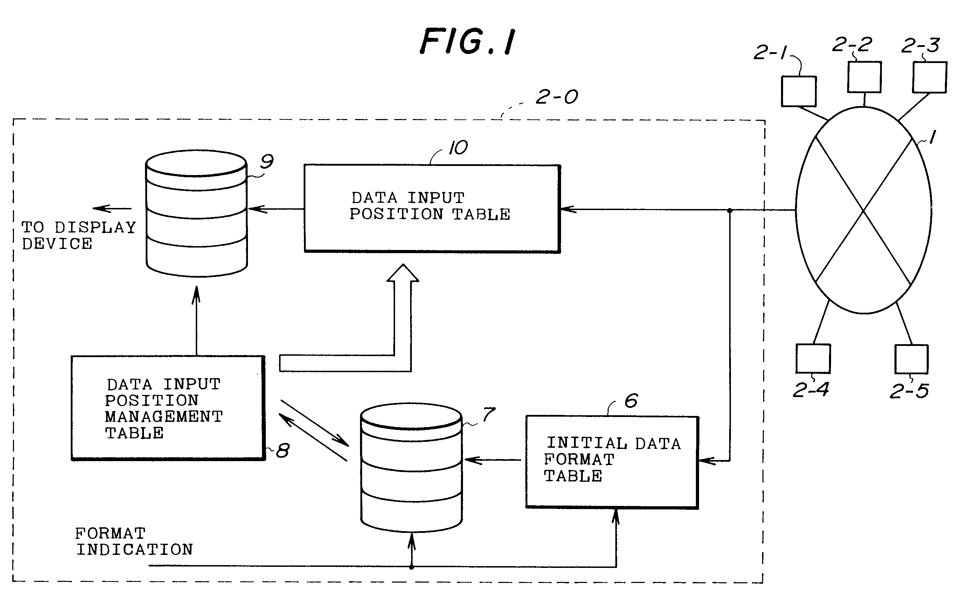

FIG.1 shows an outline of a data gathering system according to a preferred embodiment of the present invention. A data gathering system 2-0 is connected to a network 1 and is composed of a format table 6, a parts file 7, a data input position management table 8, a variable-data file 9 and a data input position table 10. A plurality of network devices 2-1 through 2-5, each having predetermined data, such as supervisory data, are connected to the network. It is possible to consider the data gathering system 2-0 as a one network device. The data gathering system 2-0 gathers the supervisory data generated and output by the network devices 2-1 through 2-5 and automatically creates a data base in a manner described later. Examples of the network devices 2-1 through 2-5 are telephone sets, workstations, private branch exchanges, multiplexers and modems.

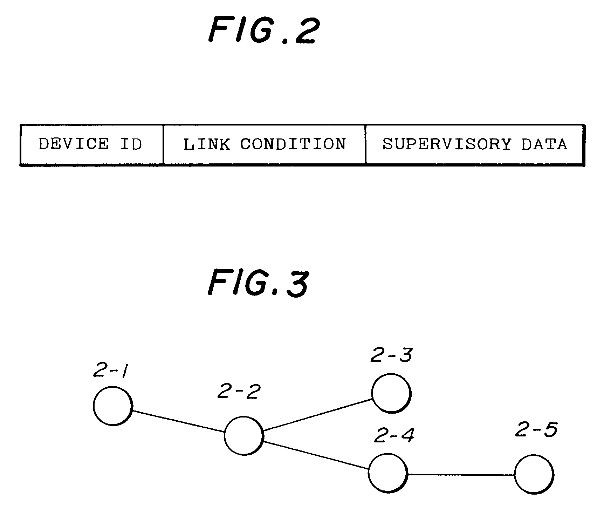

FIG.2 shows a format used when each of the network devices 2-1 through 2-5 sends data to the network 1. As shown in FIG.2, the data format is composed of device identification data, link condition data and supervisory data. The device identification data is composed of data indicating the type of the device and data identifying one of a plurality of network devices of the same time. For example, a private branch exchange has device identification data "P-01", a multiplexer has device identification data "M-01", and a modem has device identification data "D-01".

The link condition data shows a position in the network connecting the network devices 2-1 through 2-5. If the network devices 2-1 through 2-5 has a network structure shown in FIG.3, the link condition data about the network device 2-1 shows that there is no upper network device and the network device 2-2 is a lower network device. The link condition data about the network device 2-2 shows the network device 2-1 is an upper network device and the network devices 2-3 and 2-4 are lower network devices. The link condition data about the network device 2-3 shoes that the network device 2-2 is an upper network device and there is no lower network device. The link condition data about the network device 2-4 shows that the network device 2-2 is an upper network device and the network device 2-5 is a lower network device. The link condition data about the network device 2-5 shows the network device 2-4 is an upper network device and there is no lower network device. It may be possible to omit the link condition data on the basis of the network structure. For example, if all the network devices 2-1 through 2-5 are connected to a loop network or bus network.

Returning now to FIG.2, the supervisory data is status information on the network device identified by the device identification data. For example, the supervisory data shows whether or not the power supply is ON, whether a fan for cooling the network device is ON, whether a signal input to the network device being considered has a normal level, or whether a signal output by the network device has a normal level. In general, each network device has a plurality of printed circuit boards. Thus, it is possible to define supervisory data for each of the printed circuit boards.

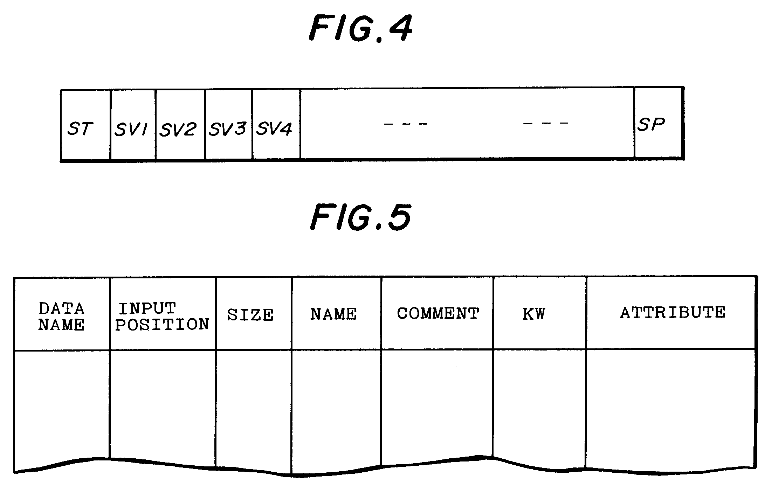

FIG.4 shows a format of the supervisory data included in the data format shown in FIG.2. The supervisory data is composed of a start signal ST, a plurality of supervisory data blocks SV1, SV2, ..., and a stop signal SP. The supervisory data blocks SV1, SV2, ..., may have identical or different data lengths. For example, the supervisory data block SV1 has m bits (m is an integer) and shows whether or not the power supply is ON. The supervisory data block SV2 has n bits (n is an integer) and shows whether or not the fan is ON. Further, the supervisory data block SV3 has n bits and shows whether or not the input signal is in a normal level range. In this manner, the supervisory data blocks are arranged in a predetermined order. The format of the supervisory data can be defined for each type. The format shown in FIG.4 is registered in the data gathering system 2-0.

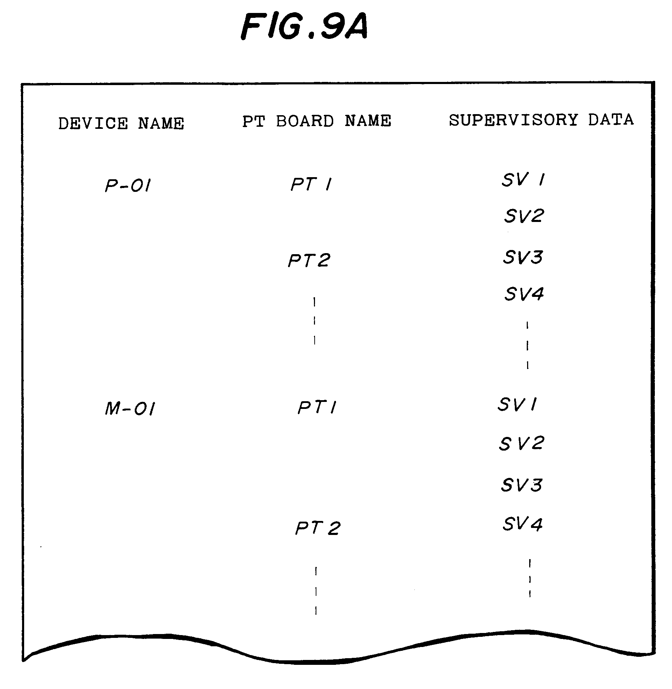

The parts file 7 registers, as "parts", all separatable data, such as device identification data, the link condition data and supervisory data. FIG.5 is an example of the parts file 7. The parts file 7 shown in FIG.5 includes a data name (parts name), a data input position, a data size, a title, a comment, a keyword (kw) and attribute information. The information about the data name, the data input position and the data size is automatically written into the parts file 7 by referring to the data input position management table 8 during a procedure which will be described later. The information about the name, comment and kw can be input by an operator via an input device, such as a keyboard (not shown in FIG.1). The attribute information shows an alarm/non-alarm indication, the link condition, an abstraction condition, such as "is-a" or "part of", and so on. Further, the attribute information shows which one of formats shown in FIGS.9A through 9C (which will be described later) should be used.

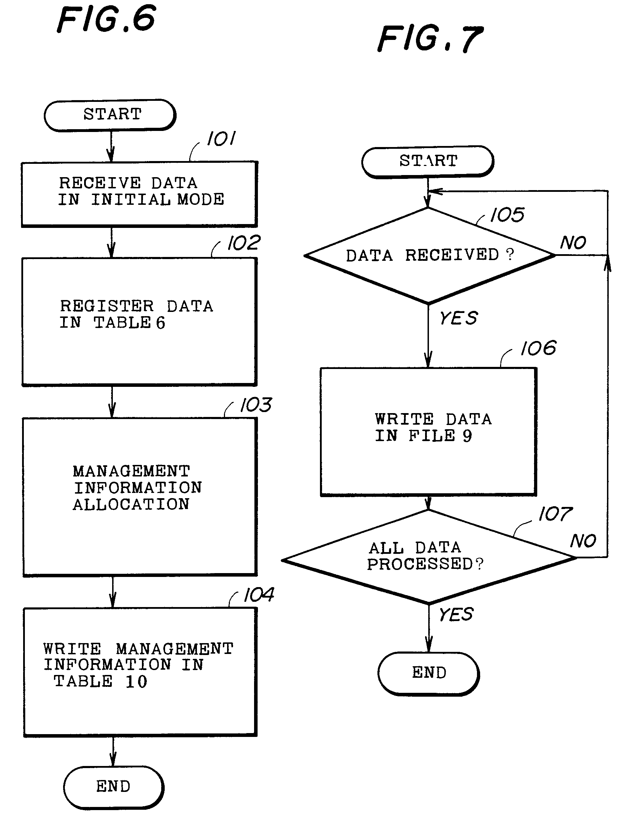

FIG.6 shows an initial procedure executed by the data gathering system 2-0, and FIG.7 shows an actual procedure which is executed after the initial procedure. The procedures shown in FIGS.6 and 7 are executed under the control of a control means (not shown in FIG.1 for the sake of simplicity).

At step 101 in FIG.6, the data gathering system 2-0 receives data from the network 1 in an initial mode in which the initial procedure is executed. The received data is supplied to the initial data format table 6 and the data input position table 10. The initial data format table 6 stores information about the formats shown in FIGS.2 and 4. At step 102, the received data is registered, as parts, into the parts file 7 by referring to the contents of the initial data format table 6. At step 103, management information about the data name, the address and size of a storage area in the data file 9 for storing real data received during the procedure shown in FIG.7 is determined by referring to the data input position management table 8. At step 104, the above management information showing the data name, the address and size of the allocated storage area is written into the data input position table 10. In the initial mode, some different type data (different parts types) are received from the network and the initial procedure shown in FIG.6 is repeatedly executed. For example, a poling signal is supplied, via the communication network 1, to the network terminals 2-1 through 2-5, which respectively sends data to the communication network 1 in response to the received poling signal.

At step 105 shown in FIG.7, it is determined whether or not data is received. When the result obtained at step 105 is YES, step 106 is executed at which the received data is written into the corresponding storage area in the data file 9 by referring to the data input position table 10 more specifically, the data name, the storage address and the size of the storage area. At step 107, it is determined whether or not the received data has been processed. When the result at step 107 is YES, the procedure ends. When the result at step 107 is NO, the procedure returns to step 105. In the above-mentioned manner, separatable data received from the network 1 is stored in the data file 9.

A description will now be given of a data gathering system according to a second preferred embodiment of the present invention. The second preferred embodiment of the present invention has the function of displaying data stored in the data file 9 on a display device.

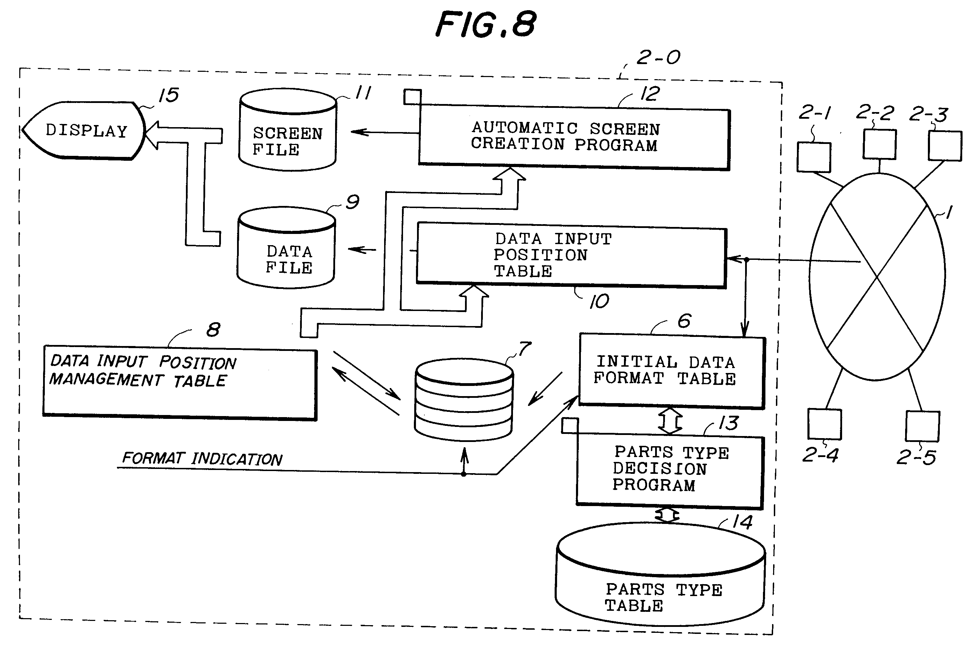

FIG.8 is a block diagram of the second preferred embodiment of the present invention. In FIG.8, those parts which are the same as those shown in FIG.1 are given the same reference numerals. The data gathering system 2-0 shown in FIG.8 includes a screen file 11, an automatic screen creation program 12, a parts type decision program 13, a parts type table 14 and a display device 15.

The received data is stored in the data file 9 in the same way as described previously with reference to FIGS.6 and 7. The automatic screen creation program 12 is provided for generating fixed information (screen format) necessary to create the screen. The screen is created in the form of a list, a table and/or a pattern.

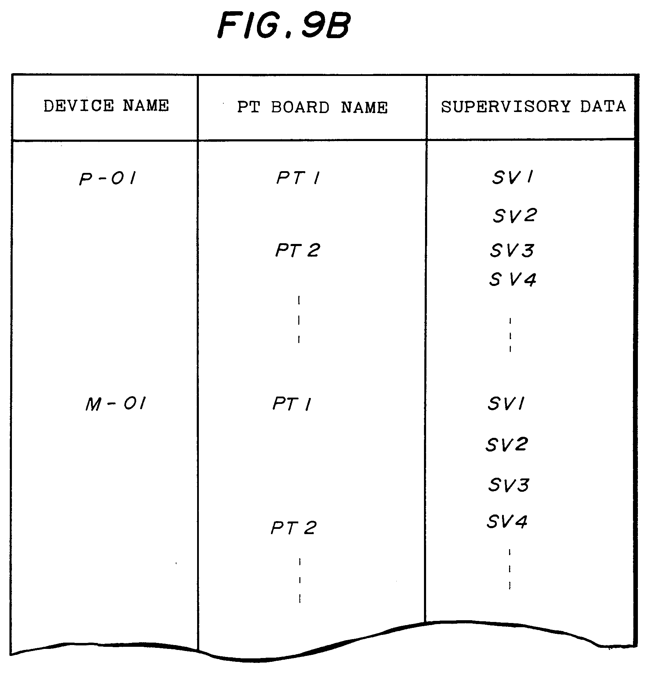

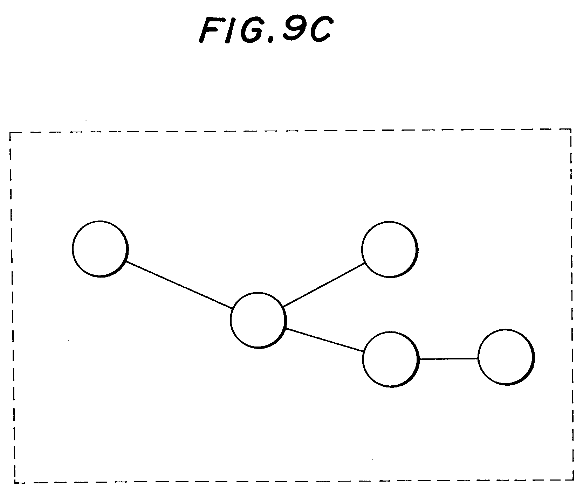

FIG.9A shows a list displayed on the screen. As shown, the list has data about the terminal names, printed circuit board names and types of supervisory data. FIG.9B shows a table displayed on the screen. As shown, the data shown in FIG.9A is displayed on the screen in the form of table. FIG.9C shows a pattern displayed on the screen. The pattern shown in FIG.9C shows a connection between the network devices 2-1 through 2-5.

The automatic screen creation program 12 defines the fixed information showing, for example, the frame of the list shown in FIG.9B. Which one of the formats shown in FIGS.9A through 9C should be used is indicated by the data input position management table 8. The aforementioned management table defined in the data input position management table 8 is obtained based on the information stored in the parts file 7.

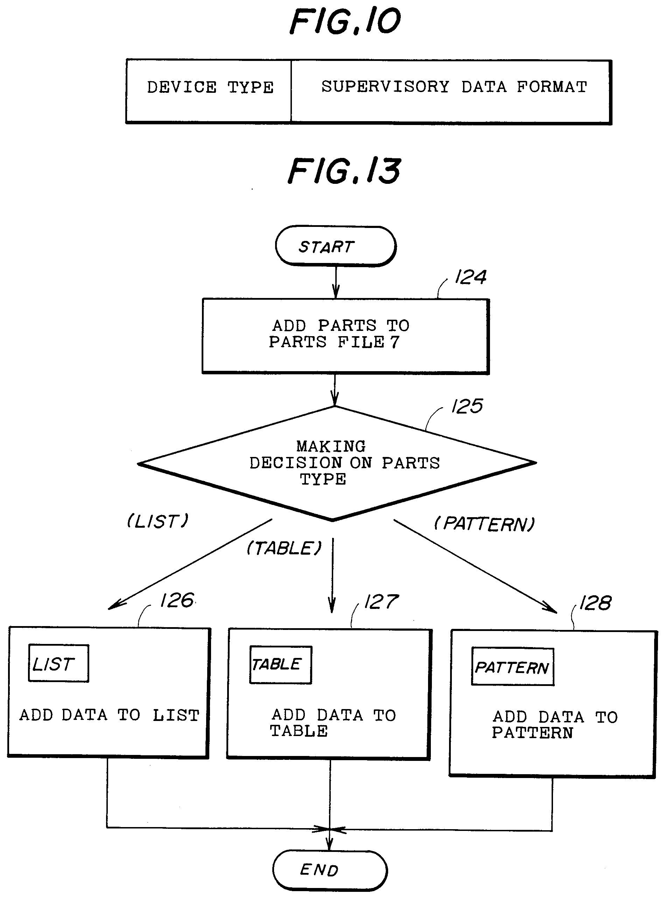

The parts type decision program 13 and the parts type table 14 are used to handle a format which has not yet been defined in the initial data format table 6. FIG.10 shows an example of the parts type table 14, which includes data about the device type and the supervisory data having the format shown in FIG.4. In FIG.10, P denotes a private branch exchange, M denotes a multiplexer, and D denotes a modem. If data having a format which has not been registered in the initial data format table 6 is received, the parts type decision program 13 is activated. The parts type corresponds to the types of the network devices. Data having a format which has not been registered in the initial data format table 6 has a type different from the types defined in the initial data format table 6. The parts type table 14 stores parts types used in the system. The activated parts type decision program 13 identifies the parts type of the received data by comparing the device identification number contained in the received data and the parts types registered in the parts type table 14. Then, the received data having the identified parts type is written into the parts file 7. The management information registered in the data input position management table 8 includes information about the parts type, which is applied to the data input position table 10 and the automatic screen creation program 12.

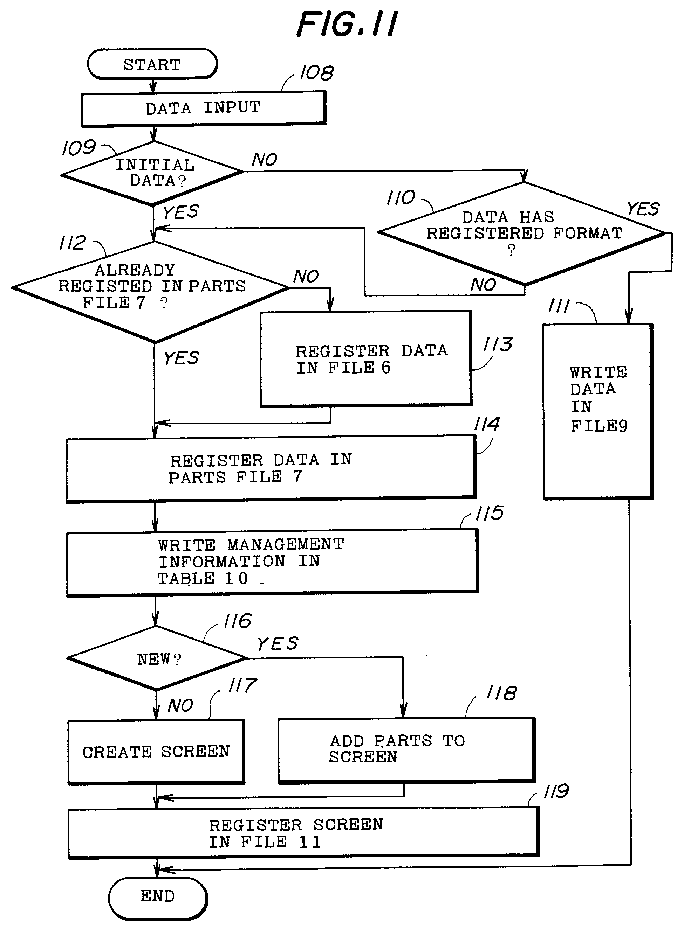

FIG.11 shows the operation of the second embodiment of the present invention shown in FIG.8. At step 108, data is received. At step 109, it is determined whether or not the received data is initial data. At step 112, it is determined that the received data is parts which have been registered in the parts file 7 when the result obtained at step 109 is YES. When the result at step 109 is NO, it is determined whether or not the received data has a format which has been registered. When the result at step 110 is YES, the received data is input to the data file 9. When the result at step 110 is NO, step 112 is executed.

When the result at step 112 is NO, the format of the received data is registered in the initial data format table 6. At step 114, the received data is registered, as parts, in the parts file 7. At step 115, data about the data name, the data input position and the data size shown in FIG.5 are written into the data input position table 10. At step 116, it is determined whether or not the received data has a new type. When the result at step 116 is NO, the automatic screen creation program 12 is activated and the screen is generated. When the result at step 116 is YES, the received data, which is parts, is added to the screen. At step 119, data about the created screen is registered in the screen file 11. The contents of the screen file 11 and the data file 9 are read out therefrom and supplied to the display device 15 on which superimposed images are displayed under the control of a controller (which corresponds to a CPU 21 described later).

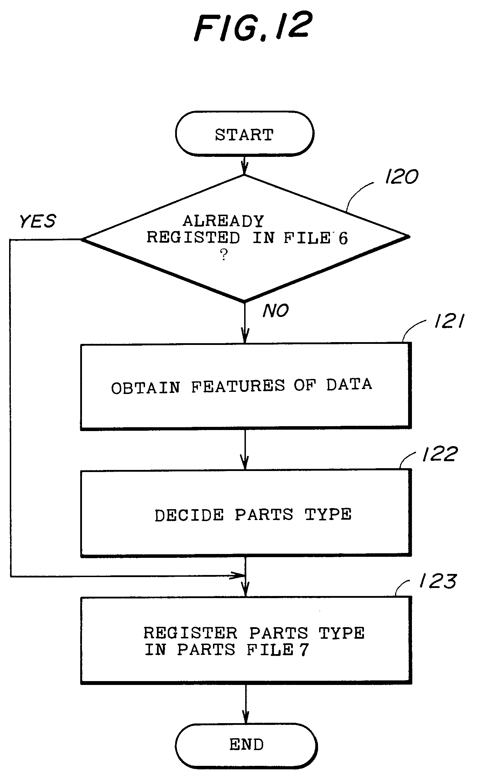

FIG.12 shows the parts type decision program 13. At step 120, it is determined whether or not the received data has a format which has not yet been registered in the initial data format table 120. The step 120 corresponds to step 110 shown in FIG.11. At step 121, the features of the received data are obtained by referring to the parts type table 13. At step 122, the parts type of the received data is decided based on the obtained features, and this parts type is registered in the initial data format table 6. The steps 121 and 122 correspond to step 113. At step 123, which corresponds to step 114 shown in FIG.11, it is requested that the received data be registered in the parts file 7 as the parts having the decided parts type.

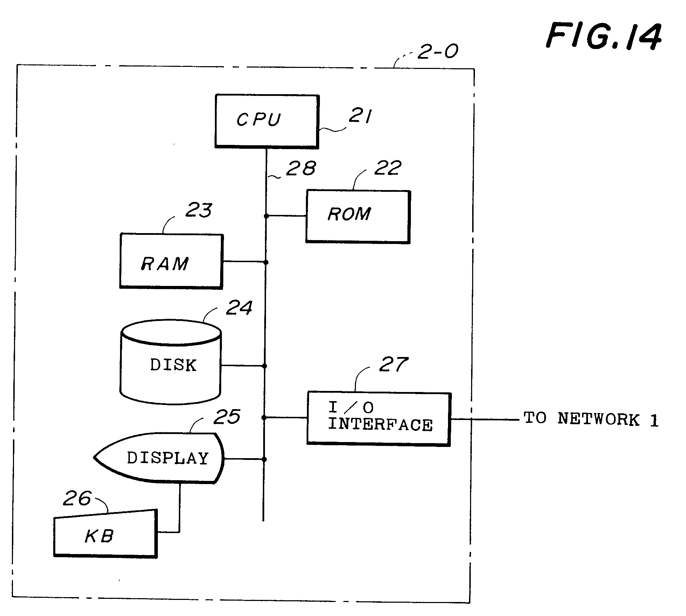

FIG.13 shows the automatic screen creation program 12. At step 124, which corresponds to step 114 shown in FIG.11, the parts are registered in the parts file 7. At step 125, the parts type being considered is identified. When the list format is requested, at step 126 the data is added to the list displayed on the screen which has been created. When the table format is requested, at step 127 the data is added to the table displayed on the screen which has been created. When the pattern format is requested, the data is added to a pattern which shows data closet to the data, taking into account the parts type and the data name.

FIG.14 is a block diagram of a hardware structure of the data gathering system 2-0. As shown, the data gathering system 2-0 is composed of a CPU (Central Processing Unit) 21, a ROM (Read Only Memory) 22, a RAM (Random Access Memory) 23, a disk device (DISK) 24, a display device (DISPLAY) 25, a keyboard (KB) 26 and an input/output (I/O) interface 27. These structural elements 21 - 27 are coupled to each other via a bus 28.

The disk 24 corresponds to the initial data format table 6, the parts file 7, the data input position management table 8, the data file 9, the data input position table 10, the screen file 11, and the parts type table 14. The automatic screen creation program 12 and the parts type decision program 13 are stored in the ROM 23. The data gathering system 2-0 is connected to the network 1 via the I/O interface circuit 27. The CPU 21 controls the entire operation of the data gathering system.

It is possible to connect the data gathering system 2-0 to a high-order device, such as a host computer. In this case, the data gathering system functions as a front-end processor.

The present invention is not limited to the specifically disclosed embodiments, and variations and modifications may be made without departing from the scope of the present invention.

Reference signs in the claims are intended for better understanding and shall not limit the scope.

## Claims

1. A data gathering system for a communication network (1) which mutually couples a plurality of network devices (2-1 - 2-5), characterized in that said data gathering system comprises:

data file means (9), coupled to the communication network, for storing initial data received from the communication network in accordance with a predetermined management format;

parts file means (7), coupled to the communication network, for storing parts data about the initial data, said parts data having information which categorizes the initial data;

data input position management means (8), coupled to said parts file means, for generating management information which defines said predetermined management format from said parts data stored in said parts file means, said management information including identification data identifying real data received from said network and position data indicative of a storage area formed in said data file means in which said real data should be stored; and

data input position table means (10), coupled to said data file means and said data input position management means, for receiving the real data from the communication network and for instructing said data file means to store the real data in accordance with the management information.

2. A data gathering system as claimed in claim 1, characterized by further comprising initial format table means (6), coupled to the communication network and said parts file means, for storing data about a format having parts type data for categorizing data received from the communication network, said initial data being categorized and stored in said parts file means in accordance with said format.

3. A data gathering system as claimed in claim 2, characterized by further comprising means (13, 14) for determining whether or not data received from the communication network has parts type data which has been stored in said parts file means and for adding parts type data about said data received from the communication network to the format stored in the initial format table means.

4. A data gathering system as claimed in claim 1, characterized by further comprising:

a display device (15, 25);

screen creation means (11-12), coupled to said data input position management table, for generating screen format information showing a screen format displayed on the display device by using said management information including the identification data and the position data; and

means (21), coupled to said display device and said screen creation means, for receiving the real data stored in the data file means and said screen format information and for making said display device to display said real data in accordance with the screen format defined by the screen format information.

5. A data gathering system as claimed in claim 1, characterized by further comprising:

a display device (15, 25);

screen creation means (12), coupled to said data input position management table, for generating screen format information showing a plurality of screen formats displayed on the display device by using said management information including the identification data and the position data and for outputting one of the plurality of screen formats in accordance with attribute data contained in said management information; and

means (21), coupled to said display device and said screen creation means, for receiving the real data stored in the data file means and said screen format information and for making said display device to display said real data in accordance with said one of the plurality of screen formats defined by the screen format information.

6. A data gathering system as claimed in claim 1, characterized in that said real data comprises supervisory data which shows a status of one of the network devices.

7. A data gathering system as claimed in claim 2, characterized in that said parts type data includes information showing predetermined types of said network devices.

8. A data gathering method for a communication network (11) which mutually couples a plurality of network devices, said data gathering method comprises the steps of:

storing initial data received from the communication network in a data file (9) in accordance with a predetermined management format;

storing parts data about the initial data in a parts file (7), said parts data having information which categorizes the initial data;

generating management information which defines said predetermined management format from said parts data stored in said parts file, said management information including identification data identifying real data received from said network and position data indicative of a storage area formed in said data file in which said real data should be stored; and

receiving the real data from the communication network and instructing said data file to store the real data in accordance with the management information.

9. A data gathering method as claimed in claim 8, characterized by further comprising the step of storing data about a format having parts type data for categorizing data received from the communication network in an initial format table, said initial data being categorized and stored in said parts file in accordance with said format.

10. A data gathering method as claimed in claim 9, characterized by further comprising the steps of:

determining whether or not data received from the communication network has parts type data which has been stored in said parts file; and

adding parts type data about said data received from the communication network to the format stored in the initial format table.

11. A data gathering method as claimed in claim 8, characterized by further comprising the steps of:

generating screen format information showing a screen format displayed on a display device (15, 25) by using said management information including the identification data and the position data; and

receiving the real data stored in the data file and said screen format information and for making said display device to display said real data in accordance with the screen format defined by the screen format information.

12. A data gathering method as claimed in claim 8, characterized by further comprising the steps of:

generating screen format information showing a plurality of screen formats displayed on a display device (15, 25) by using said management information including the identification data and the position data;

outputting one of the plurality of screen formats in accordance with attribute data contained in said management information;

receiving the real data stored in the data file and said screen format information;

making said display device to display the real data in accordance with said one of the plurality of screen formats defined by the screen format information.

13. A data gathering method as claimed in claim 8, characterized in that said real data comprises supervisory data which shows a status of one of the network devices.

14. A data gathering method as claimed in claim 9, characterized in that said parts type data includes information showing predetermined types of said network devices.

FIG. 1

## FIG.2

| DEVICE ID | LINK CONDITION | SUPERVISORY DATA |
|-----------|----------------|------------------|

## FIG.3

2-1  2-2  2-3  2-4  2-5

EP 0 481 455 A2

EP 0 481 455 A2

## FIG.4

| ST | SVI | SV2 | SV3 | SV4 | - - -          - - - | SP |
|----|-----|-----|-----|-----|----------------------|----|

## FIG.5

| DATA NAME | INPUT POSITION | SIZE | NAME | COMMENT | KW | ATTRIBUTE |
|-----------|----------------|------|------|---------|-----|-----------|
|           |                |      |      |         |     |           |

# FIG.6

```
      ( START )
          |
          v
    +------------------+  101
    | RECEIVE DATA     |
    | IN INITIAL MODE  |
    +------------------+
          |
          v
    +------------------+  102
    |                  |
    | REGISTER DATA    |
    | IN TABLE 6       |
    |                  |
    +------------------+
          |
          v
    +------------------+  103
    |                  |
    | MANAGEMENT       |
    | INFORMATION      |
    | ALLOCATION       |
    |                  |
    +------------------+
          |
          v
    +------------------+  104
    | WRITE MANAGEMENT |
    | INFORMATION IN   |
    | TABLE 10         |
    |                  |
    +------------------+
          |
          v
      ( END )
```

# FIG.7

```
      ( START )
          |
          v
       /\  105
      /  \      NO
  < DATA RECEIVED ? >------+
      \  /                 |
       \/                  |
       | YES               |
       v                   |
    +------------------+  106
    |                  |   |
    | WRITE DATA       |   |
    | IN FILE 9        |   |
    |                  |   |
    +------------------+   |
          |               |
          v               |
       /\  107            |
      /  \      NO         |
  < ALL DATA        >------+
  < PROCESSED?      >
      \  /
       \/
       | YES
       v
      ( END )
```

# FIG.8

EP 0 481 455 A2

# FIG.9A

| DEVICE NAME | PT BOARD NAME | SUPERVISORY DATA |
|:---:|:---:|:---:|
| P-01 | PT 1 | SV 1 |
| | | SV2 |
| | PT2 | SV3 |
| | | SV4 |
| | ⋮ | ⋮ |
| M-01 | PT1 | SV1 |
| | | S V2 |
| | | SV3 |
| | PT 2 | SV4 |
| | ⋮ | ⋮ |

13

# FIG.9B

| DEVICE NAME | PT BOARD NAME | SUPERVISORY DATA |
|:---:|:---:|:---:|
| P-01 | PT 1 | SV1 |
| | | SV2 |
| | PT 2 | SV3 |
| | | SV4 |
| | ⋮ | ⋮ |
| M-01 | PT 1 | SV1 |
| | | SV2 |
| | | SV3 |
| | PT 2 | SV4 |
| | ⋮ | ⋮ |

14

*FIG.9C*

# FIG.10

| DEVICE TYPE | SUPERVISORY DATA FORMAT |
|---|---|

# FIG.13

```
        ┌──────────────┐
        │    START     │
        └──────┬───────┘
               │
               ▼                        124
        ┌──────────────────┐
        │  ADD PARTS TO    │
        │  PARTS FILE 7    │
        └────────┬─────────┘
                 │
                 ▼                      125
            MAKING
        DECISION ON PARTS
            TYPE
```

(LIST)  (TABLE)  (PATTERN)

126

| LIST |
| :--- |
| ADD DATA TO LIST |

127

| TABLE |
| :--- |
| ADD DATA TO TABLE |

128

| PATTERN |
| :--- |
| ADD DATA TO PATTERN |

```
        ┌──────────────┐
        │     END      │
        └──────────────┘
```

# FIG. II

```
                    ┌──────────────┐
                    │    START     │
                    └──────┬───────┘
                           │              108
                    ┌──────▼───────┐
                    │  DATA INPUT  │
                    └──────┬───────┘
            109            │                              NO
                    ┌──────▼───────┐────────────────────────────────────┐
                    │   INITIAL    │                                     │
                    │    DATA?     │                                     │
                    └──────┬───────┘              110                    │
                       YES │              ┌──────────────────┐          │
            112            │              │    DATA HAS      │   YES    │
                    ┌──────▼───────┐      │ REGISTERED FORMAT │──────────┤
                    │   ALREADY    │  NO  │       ?          │          │
                    │ REGISTED IN PARTS │ └────────┬─────────┘          │
                    │   FILE 7 ?   │──────┐       NO                    │
                    └──────┬───────┘      │                  111        │
                       YES │       ┌──────▼───────┐    ┌──────────────┐ │
                           │       │ REGISTER DATA │    │    WRITE     │ │
                           │       │  IN FILE 6   │113 │    DATA      │ │
                           │       └──────┬───────┘    │     IN       │ │
                           │              │            │    FILE9     │ │
                    ┌──────▼──────────────▼───┐114     │              │ │
                    │   REGISTER DATA IN       │        └──────┬───────┘ │
                    │   PARTS FILE 7           │               │        │
                    └──────┬───────────────────┘               │        │
                    ┌──────▼───────────────────┐115            │        │
                    │   WRITE MANAGEMENT        │               │        │
                    │   INFORMATION IN          │               │        │
                    │   TABLE 10                │               │        │
                    └──────┬───────────────────┘               │        │
                    ┌──────▼───────┐116  YES                    │        │
                    │    NEW?      │──────────────┐             │        │
                    └──────┬───────┘              │             │        │
                       NO  │  117      118        │             │        │
                    ┌──────▼───────┐  ┌──────────▼───┐          │        │
                    │ CREATE SCREEN│  │ ADD PARTS TO │          │        │
                    │              │  │   SCREEN     │          │        │
                    └──────┬───────┘  └──────┬───────┘          │        │
                    ┌──────▼──────────────────▼───┐119          │        │
                    │   REGISTER SCREEN            │             │        │
                    │   IN FILE 11                 │             │        │
                    └──────┬───────────────────────┘             │        │
                    ┌──────▼───────┐◄──────────────────────────────────┘
                    │     END      │
                    └──────────────┘
```

17

# FIG. 12

```
                    ┌──────────────┐
                    │    START     │
                    └──────┬───────┘
                           │
                           ▼
                        ╱──────╲                    ⌐120
              YES    ╱   ALREADY   ╲
          ◄────────╱  REGISTED IN FILE 6 ╲
                   ╲         ?         ╱
                    ╲──────────────╱
                           │  NO
                           ▼
               ┌───────────────────────────┐  ⌐121
               │  OBTAIN FEATURES OF DATA   │
               └─────────────┬─────────────┘
                             │
                             ▼
               ┌───────────────────────────┐  ⌐122
               │     DECIDE PARTS TYPE      │
               └─────────────┬─────────────┘
                             │
                             ▼
               ┌───────────────────────────┐  ⌐123
               │    REGISTER PARTS TYPE     │
               │     IN PARTS FILE 7        │
               └─────────────┬─────────────┘
                             │
                             ▼
                    ┌──────────────┐
                    │     END      │
                    └──────────────┘
```

## FIG. 14

TO NETWORK 1

2-0

21 CPU

28

22 ROM

23 RAM

24 DISK

25 DISPLAY

26 KB

27 I/O INTERFACE